(19) Europäisches Patentamt

European Patent Office

Office européen des brevets

(11) **EP 0 864 898 A1**

(12) **EUROPEAN PATENT APPLICATION**

(43) Date of publication:
16.09.1998 Bulletin 1998/38

(51) Int. Cl.$^6$: **G02B 21/00**

(21) Application number: **97306032.0**

(22) Date of filing: **07.08.1997**

(84) Designated Contracting States:
**AT BE CH DE DK ES FI FR GB GR IE IT LI LU MC NL PT SE**

(30) Priority: **12.03.1997 EP 97301657**
**12.03.1997 EP 97301658**

(71) Applicant: **Karrai-Haines GbR**
**80336 München (DE)**

(72) Inventors:
• **Karrai, Khaled, Prof.Dr.**
**80336 München (DE)**
• **Manus, Stephan**
**81479 München (DE)**

(74) Representative:
**Lange, Thomas, Dr.**
**Patentanwalt,**
**Zentnerstrasse 17**
**80798 München (DE)**

(54) **Near-field optical microscope**

(57) A near-field optical microscope comprising an optics module (2) and a positioning module (4). The optics module houses a near-field probe formed at the end of a single-mode fibre (38); an ellipsoid mirror (41) having a hole arranged axially in its base to allow placement of a sample (P) from below at its lower focus; a section of multi-mode optical fibre (7) positioned with its aperture at the upper focal point of the ellipsoid mirror (41) to collect the optical signal and pass it on to a detector; and a lens (36) arranged to allow independent imaging of the sample region and having a hole extending through its optical axis through which passes a sheath (9) in which the multi-mode optical fibre (7) is slidably arranged so that the positions of the fibre aperture and the lens can be independently adjusted along the optical axis. The positioning module (4) houses coarse and fine positioning units (42 and 43) and a sample holder (45). The modules (2 and 4) are releasably coupled to each other so that the positioning module (4) can be detached without disturbing the alignment of the optical components of the optics module (2).

Fig. 1

## Description

The invention relates to a near-field optical microscope.

A near-field optical microscope is disclosed in US-A-5473157 which can be built into a cryostat and can be operated at temperatures down to 4.2 Kelvin. In this known measurement system, Cassegrain optics comprising two mirrors is used for the collection of light reflected from the sample (see Fig. 4 of US 5473157) and collects around four percent of the total solid angle (i.e. around eight percent of the reflected half of the total solid angle). Moreover, in this known measurement system an optical system is used for the regulation system for controlling the separation between the near-field optical probe and the sample surface, the intensity of the light scattered from the near-field optical probe being used as the feed-back parameter (see Fig. 2 of US 5473157). This regulation system requires the use of a cryostat that has windows and also occasional adjustment of the optical components of the regulation system.

A first aspect of the invention is exemplified by claim 1 and its subordinate claims.

According to a second aspect of the invention there is provided a near-field optical probe made of a tapering end of a glass fibre and a waveguiding metal layer, characterised by an intermediate layer between the glass fibre and the metal layer for improving the adhesion of the metal layer. The intermediate layer is preferably made of nickel-chromium alloy. The intermediate layer preferably has a thickness of 3 to 50 nm, preferably 5 to 10 nm. The metal layer is preferably made of aluminium. The metal layer preferably has a thickness of 100 to 300 nm, most preferably 120 to 150 nm.

The invention is described in more detail by way of example in the following with the aid of the accompanying drawings in which:

Fig. 1     is a schematic diagram of a near-field optical microscope;

Fig. 2     shows the geometry and the parameters of an ellipsoid mirror which forms part of the collection optics of the near-field optical microscope;

Fig. 3     shows the dependence of the percentage proportion of the collected solid angle upon the parameters of the ellipsoid section;

Fig. 4     shows a probe head of the near-field optical microscope comprising a quartz tuning fork and a single mode fibre secured thereto;

Fig. 5     shows a circuit diagram of a signal preprocessing circuit according to a first circuit embodiment and integrated with the probe in the probe head;

Fig. 6     shows schematically a perspective view of the probe head (without probe) with circuit board bearing a signal preprocessing circuit according to the first circuit embodiment, the tuning fork also being a component of the circuit and being affixed to the circuit board with its back face;

Fig. 7     shows a circuit diagram of a signal preprocessing circuit according to a second circuit embodiment;

Fig. 8     is a component table for two examples 1A and 1B of the circuit of the first circuit embodiment and three examples 2A, 2B and 2C of the circuit of the second circuit embodiment;

Fig. 9     is a graph showing the results of an experiment performed to compare the signal delivered by a probe head according to Example 1A of the first circuit embodiment (upper curve) and the signal delivered by a corresponding tuning fork based probe head without the circuit of Figure 5 (lower curve);

Fig. 10    shows the signal-to-noise ratio in arbitrary units as a function of bias voltage VDD of a head for a near-field optical microscope, the head having the circuit of Example 1A and a 33kHz tuning fork;

Fig. 11    is an overview of the experimental measurement set-up of the near-field optical microscope; and

Fig. 12    shows the near-field optical microscope arranged in a cryostat insert.

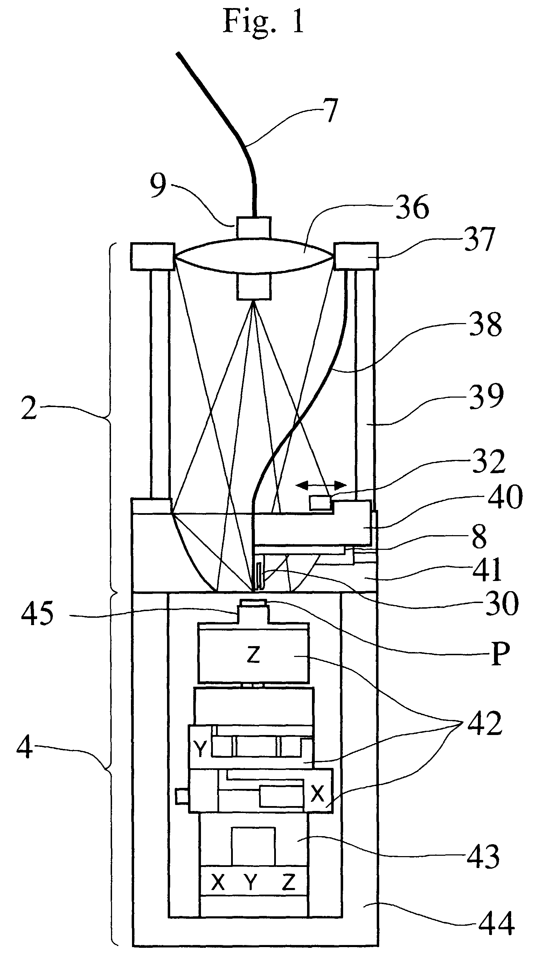

Fig. 1 is a schematic diagram of a near-field optical microscope. The microscope has a modular construction comprising first and second modules 2 and 4. The first module 2, referred to as the optics module in the following, houses the components for illuminating the sample P and for collecting the light signal from the sample P, as well as the shear-force sensor for regulating the separation between the near-field optical probe and the sample surface. The second module 4 houses means for macroscopically and microscopically positioning the sample in x, y and z directions and is referred to as the positioning module in the following.

The positioning module 4 comprises a sample mount 45, an xyz-micropositioning unit 43, an xyz-macropositioning unit 42 and a housing 44. The xyz-micropositioning unit 43 has a travel in the micron range and a precision on the nanometre range or better. The micropositioning unit 43 serves for the image rastering (i.e. scanning) in the x and y directions and the tip-sample distance regulation in the z-direction that is performed in some scanning modes, for example constant intensity mode and constant shear force mode. The xyz-macropositioning unit 42 has a travel in the millimetre range and a precision in the tens of nanometre range. The xyz-macropositioning unit 42 serves for moving the region of interest of the sample into registry with the near-field optical probe in the x and y directions and for providing the so-called "coarse" approach of the sample surface and probe in the z-direction to a distance at which the shear-force feedback becomes operable, this distance generally being of the order of a few nanometres to a few tens of nanometres. The housing 44 is made of solid aluminium having cylindrical walls, a base wall and an open upper end. The rim of the cylindrical wall at the upper end of the housing 44 is provided with threaded stubs extending in the z-direction for forming a releasable connection with the optics module 2. The xyz-micropositioning unit 43 is arranged on the base of the housing 44 and the xyz-macropositioning unit 42 is arranged in turn on top of the xyz-micropositioning unit 43.

The micropositioning unit 43 used is from the company Piezo Jena and has the type code 3D Tritor 38 NV. Its dimensions are 25mm in length, 25mm in breadth and 27mm in height. At room temperature, the extension of each axis of the micropositioning unit 43 is approximately 43 microns and is varied by varying the applied DC bias voltage between 0 and 150V, the capacitance per axis being around 750 nF. At a temperature of 4.2K, the extension reduces to 1.4 microns and is varied by varying the applied DC bias voltage between 0 and 100V, the capacitance per axis being around 44 nF.

The macropositioning unit 42 has three piezoelectric stacks, one per movement axis, and is an inertial motor operating according to the slip-stick principle. Further details of the macropositioning unit can be found in EP97112450.8, the whole contents of which is incorporated herein by reference. The macropositioning unit 42 is operable at 300K, at 4.2K and at intermediate temperatures. The dimensions of the macropositioning unit are 20 x 27 mm in area (x and y directions) and 40mm in height (z direction). Its mass is 114 grammes. Its travel is approximately 1.5 mm in each of the x and y directions and 4mm in the z direction. The step size in each direction is typically 50 to 200 nm per step. Typical values for the applied drive voltage were 20 V at room temperature and 50V at 4.2 K.

There are however many other types of positioning units suitable for the micro- and macropositioning units 42 and 43, as is familiar to a person skilled in the art.

The optics module 2 comprises a lens 36 having a focal length of 65mm arranged at the upper end of the optics module 2 and serving for providing visual access to the sample. Visual access to the sample and the near-field optical probe is useful for monitoring the coarse approach of the near-field optical probe to the sample surface in the z-direction and for positioning the near-field optical probe into registry with a region or part of the sample which is of interest in the xy-plane.

The lens 36 for the visual access is held at its periphery by a ring 37 arranged in a floating mount which is adjustable in the x and y directions but clampable at an adjusted position, the ring 37 also being adjustable in the z direction. The lens 36 has a central through-hole accomodating a metal sheath 9 in which is held one end portion of a multi-mode fibre bundle 7. The axial position of the sheath 9 is adjustable so that the position of the end of the fibre bundle 7 in the optical module 2 can be adjusted in the z-direction. This arrangement facilitates the placement of the end of the fibre bundle 7 at the upper focus of an ellipsoid mirror 41 used to collect light reflected, or emitted, from a sample P. The multi-mode fibre bundle 7 acts as a conduit for the supply of the light signal collected by the ellipsoid mirror 41 to a remotely positioned spectrometer and subsequent detection and analysis components.

In the specific example, the multi-mode fibre bundle 7 comprises approximately 160 fibres of type IR-QQ/70 $\mu$m manufactured by Schott Glass Works. The fibres have a numerical aperture of 0.25, a core diameter of 70 $\mu$m and a transmission of approximately 60 to 70% over a wavelength range from 400 nm to 2.2 $\mu$m. The multi-mode fibre bundle 7 is a flexible IR cross-section converter having a proximal end of 1mm in diameter and a distal end having a right-angled geometry of 2.5 mm by 0.3 mm. Large core multi-mode fibres provide for a greater collection efficiency in comparison to single-mode fibres. The relatively large, circular area at the proximal end presented by the large number of fibres facilitates the adjustment of the fibre bundle 7 into the upper focus of the ellipsoid mirror 41. Moreover, the cross-sectional change from a round geometry at the proximal end to a rectangular geometry at the distal end, i.e. a shape corresponding to that of the spectrometer entrance slit, allows the achievable spectral resolution to be improved by a factor 3.

As a less costly, and also otherwise attractive, alternative to the fibre bundle 7, a single multi-mode fibre of large core diameter could be used, for example fibre with a core diameter of 100 to 300 microns.

In the outer region of the microscope, away from its proximal end, the fibre bundle 7 is mechanically strengthened by a protective sheath.

Three brass rods 39 extend from the underside of the adjustment ring 37 to the upper rim of the ellipsoid mirror 41, forming connections at the rod ends by means of male threaded fasteners screwed into to female receiving threads in the ends of the rods 39. This arrangement provides sufficient mechanical stability and also allows for a rapid exchange of the near-field optical probe.

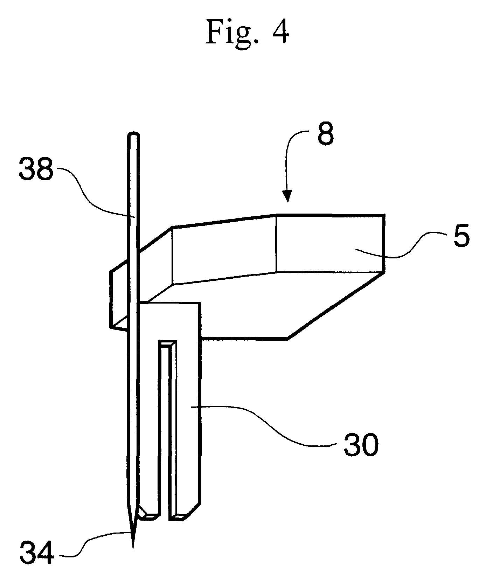

The optics module 2 comprises a probe head sub-assembly comprising a circuit board 5 on which a signal preprocessing circuit 8 is arranged, a quartz tuning fork 30 arranged upstanding from the circuit board 5 and the near-field optical probe 34 which is formed by an aperture at a tapered end of the single mode optical fibre 38, a portion of which fibre is adhesively bonded along a side of a prong of the tuning fork 30. The probe head sub-assembly is illustrated schematically in Fig. 4 and described in more detail further below. The probe head sub-assembly is secured in the optics module 2 to an anchor 40 so as to place the near-field optical probe 38 in the region of the lower focus of the ellipsoid mirror 41.

The single-mode fibre 38 is for illuminating a region of the sample P, generally in the near field, although far field illumination is also possible. The quartz tuning fork 30 serves as a piezoelectric oscillator and is a coupled oscillator. Other kinds of piezoelectric oscillator may be used instead of a tuning fork. However, piezoelectric oscillator in the form of coupled oscillators are preferred (e.g. a hollow bar). Moreover, the fibre is preferably mechanically coupled to one of the coupled oscillators so that forces acting on the fibre serve to detune the coupled oscillator. Piezoelectric materials other than quartz may also be used. A more detailed description of quartz tuning forks and some other suitable oscillators is given in GB-A-2289759.

A further piezoelectrical component, namely a ceramic element 32, is located on the upper side of the anchor 40 and is driven in use at the resonance frequency of the tuning fork 30 to induce resonant oscillation of the tuning fork 30 via the anchor 40 and circuit board 5. The placement of the ceramic element 32 is not critical. It need only be placed such that its oscillations are mechanically transmitted to the tuning fork 30.

The tuning fork 30 has a pair of pick-up contacts on its surface which are connected via electrical leads to the input of the signal preprocessing circuit 8 present on the circuit board 5. Further leads then supply the output of the signal preprocessing circuit 8 to further, conventional signal processing electronics exterior to the modules 2 and 4 shown in Fig. 1. The near-field optical probe 34 not only has the task of illuminating the sample over a volumetrically restricted region but also serves, in combination with the tuning fork 30, for the distance regulation between sample surface and tip aperture by exploiting the shear force interaction of the tip 34 with the sample surface, the signal from the pick-up contacts of the tuning fork 30 being damped by this interaction. This regulation mechanism is described in more detail further below when discussing the signal preprocessing circuit.

The adjustment ring 37 is mounted on the ellipsoid mirror 41. The ring has the anchor 40 secured to it. The anchor 40 carries the circuit board 5, the tuning fork 30 and the proximal end of the single-mode fibre 38. Adjustment of the ring allows the aperture of the single-mode fibre to be placed at the lower focus of the ellipsoid mirror 41.

The optics module 2 and positioning module 4 are releasably connected to one another via the underside of the ellipsoid mirror 41 and the upper rim of the housing 44 respectively. The housing 44, being a solid aluminium cylinder, and the ellipsoid mirror 41 can thus be rigidly mechanically coupled to each other to connect the modules 2 and 4 and thus form a single unit which is relatively vibration free and insensitive to external mechanical perturbations. Moreover, as a result of the modular construction, a change of sample can be effected by detaching the positioning module 4, without disturbing the arrangement of optical components in the optics module 2.

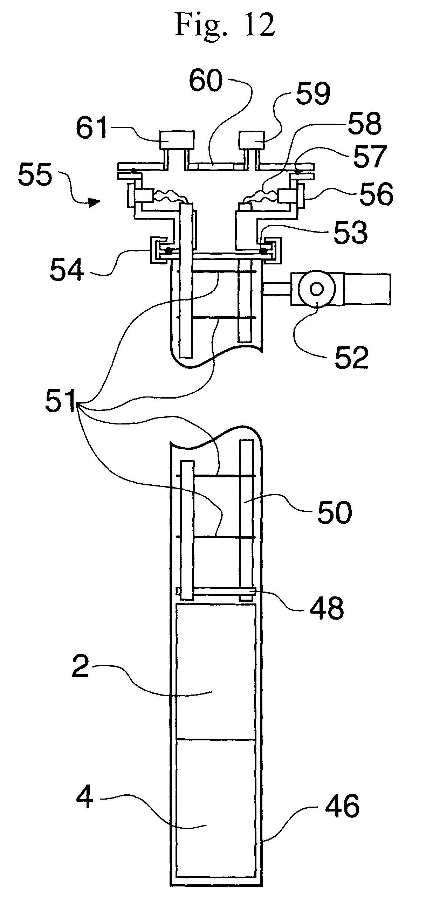

The optics module 2, with the positioning module 4 attached thereto, form a microscope unit which can be mounted as desired. For example, an arrangement in which the the modules 2 and 4 are arranged in a cryostat insert is described further below with reference to Fig. 12.

The base of the ellipsoid mirror 41 has an aperture leading through to the upper end of the positioning module 4 to allow a region of interest of a sample P mounted on the sample mount 45 to be positioned using the macropositioning unit 42, to the lower focus of the ellipsoid mirror 41. The design of the ellipsoid mirror 41 is now described in more detail.

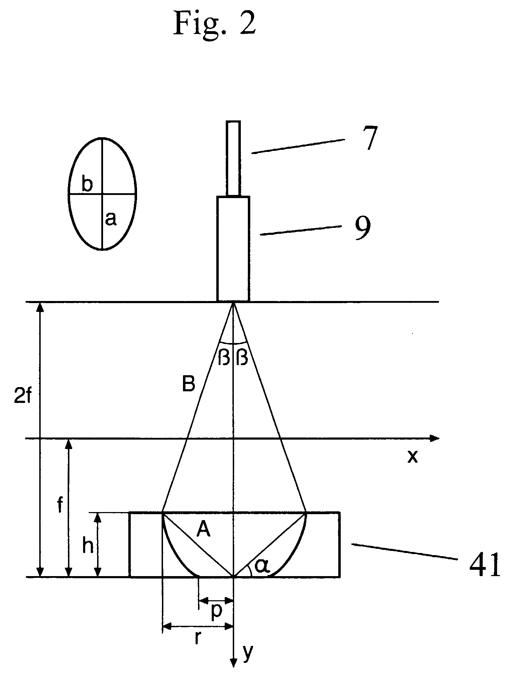

Figure 2 shows a section through the axially symmetric ellipsoid mirror (i.e. rotationally symmetric about its principal axis) and parameters relevant for its design and manufacture. Relevant parameters are: f the focal length; h the height of the ellipsoid section; p the radius of the lower mirror aperture for the sample access; r the radius of the upper mirror aperture; $\beta$ the angle defined by the numerical aperture of the multimode fibre bundle; and $\alpha$ the angle specifying the size of the collected solid angle. The two semi-axes of the ellipsoid are denoted a and b. The paths A and B are the connection paths of the relevant focal point to a point on the periphery of the ellipse.

The height h of the ellipsoid section is given by

$$h = r \tan \alpha \qquad (1)$$

The focal length f is calculated from the relation $\tan\beta = r/2f-h$ to give

$$f = r\cos(\alpha-\beta)/2\cos\alpha\sin\beta \qquad (2)$$

Together with the first fundamental property of the ellipse $A+B=2a$, where $A=r/\sin\beta$ and $B=r/\cos\alpha$, the major semi-axis is given by

$$a = f/\gamma \qquad (3)$$

where

$$\gamma = \cos(\alpha-\beta)/(\cos\alpha + \sin\beta)$$

With the linear eccentricity $f^2=a^2+b^2$ an expression for the minor semi-axis follows, namely

$$b=f\sqrt{(1-\gamma^2)}/\gamma \qquad (4)$$

and the lower aperture radius p is given by the form parameter of the ellipse, namely

$$p=b^2/a^2 \qquad (5)$$

The solid angle $\Omega$ of light from the sample collected by the ellipsoid mirror is given by

$$\Omega = \int_0^{2\pi} d\varphi \int_0^\alpha \cos\alpha \, d\alpha \qquad (6)$$

i.e. $\sin\alpha$ specifies the collection coverage in terms of a percentage of the total upper solid angle $2\pi$. Alternatively, $\sin\alpha/2$ specifies the collection coverage in terms of a percentage of the total solid angle $4\pi$.

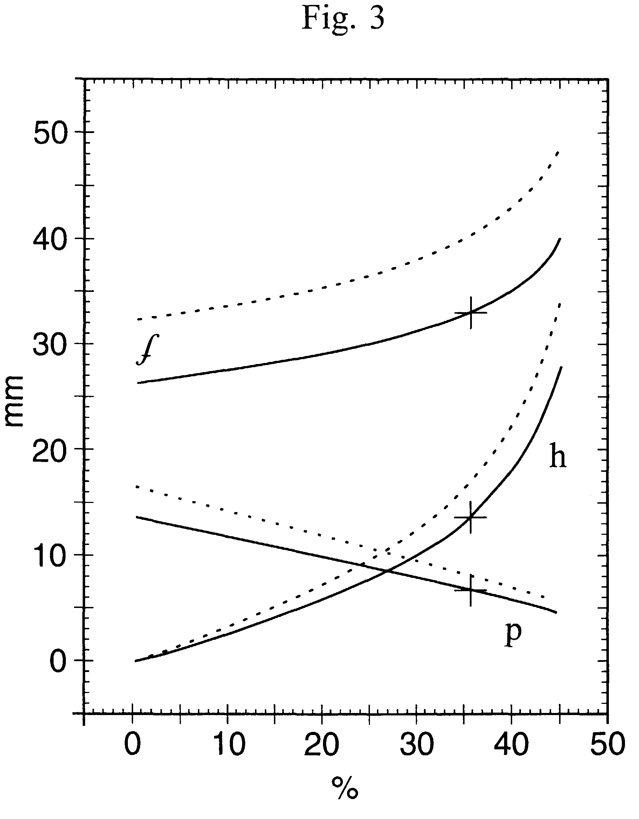

Figure 3 is a graph plotting the percentage of the collected solid angle, as a proportion to the total solid angle, against the size in millimetres of the focal length f, the height of the ellipsoid section h and the maximum lower aperture radius p. The solid and dashed lines are for upper aperture radii r of 13.5 mm and 16.5 mm respectively. The parameter values of the specific example are r = 13.5 mm, h = 14 mm, p = 6.5 mm and f = 33 mm, these values being indicated with crosses on the solid lines of Figure 3. The exemplary system has a collection coverage of approximately 35% of the total, or 70% of the upper, solid angle.

This represents an upper limit for the collection coverage achievable with optimum matching between the mirror parameters and the numerical aperture of the multi-mode fibre bundle. At the same time, there is maintained an adequately large area, of diameter 2p = 13 mm, for sample access and manipulation. Furthermore, the separation between the base of the elliptical mirror and the aperture of the multimode fibre bundle, defined by 2f = 66 mm, is kept small enough to allow the optics module to be sufficiently mechanically stable.

When no spectrometer is to be positioned on the output side of the system, a light detector, such as a p-i-n detector, can be arranged in place of the multi-mode fibre bundle 7 in which case *f*-matching to the fibre bundle is no longer a design constraint and it is possible to provide an ellipsoid mirror that is capable of collecting light over more than 40% of the total solid angle, i.e. 80% of the reflected solid angle.

The ellipsoid mirror is manufactured by machining from a cylindrical block of aluminium. The inner ellipsoid profile is realised by a numerical machining process on a CNC machine, it being noted that the machine tool used to machine the ellipsoid profile may impose a lower limit on the lower mirror aperture radius p. The surface is polished to a highly polished finish with diamond paste of various grain sizes. A cut-out provides space for the anchor 40 for mounting the probe head sub-assembly. The anchor 40 has the unwanted side effect of obscuring approximately a fifth of the solid angle which would otherwise be available.

The components of the probe head sub-assembly illustrated in Figure 4 are now described in more detail.

The near-field optical probe 34 of the specific example is formed from a section of single-mode fibre 38 of the type F-SA from the company Newport and has its attenuation minimum at a wavelength of 500nm. The fibre has a core diameter of 3.2 microns, the core being surrounded by a glass cladding and a plastic sheath. The single-mode fibre 38 is approximately 3m long. Owing to this relatively short length, attenuation considerations are of secondary importance. Excitation wavelengths of 458 nm, 514 nm and 633 nm can for example be used. The tip 34 is formed at one end of the fibre 38 based on the laser pulling process described in EP-A-487232. With this process, the size of the tip aperture and the profile of the tapered region leading to the tip can be defined by the pulling parameters. The pulled tips are coated with a layer of aluminium in order to achieve waveguiding in the tapered region of the near-field optical probe and to prevent the emission of stray light.

For improved adhesion of the aluminium, we have modified the known process by depositing a thin coating of 5 to 10 nm of nickel-chromium alloy on the tapered fibre end prior to the conventional step of metallisation with aluminium, which is deposited to a thickness of approximately 120 to 150 nm. At this thickness, the optical penetration depth is very low, being around 7 nm at a wavelength of 495 nm. In order to keep the tip apex free and to deposit a homogeneous metal layer, the optical-fibre tip is rotated at a predetermined angle to the direction of the metal vapour stream.

In the absence of the intermediate nichel-chromium layer, we have found that the aluminium layer can detach itself from the fibre in the assembled near-field optical probe head in which the fibre is adhesively bonded to the tuning fork. We believe the source of this problem is the tensions which may be built into the tip during cooling subsequent to metallisation, since considerable forces must act on the tip during cooling. In the assembled near-field optical probe head comprising tuning fork 30 and fibre 38 adhesively bonded thereto, we believe the different coefficients of thermal expansion of the tuning fork, fibre and above all of the adhesive used for securing the fibre to the tuning fork are the cause of the tendency for detachment of the aluminium, if deposited directly on the pulled fibre tip region. This problem is especially significant for low temperature studies in the course of which the probe head will be cycled in temperature as the cryostat is repeatedly cooled and warmed up to room temperature.

The near-field optical probes produced in the manner described above have typical tip apertures of between 60 nm and 250 nm, the length of the region passing from a core diameter of 500 nm to the tip aperture varying respectively between 1050 nm and 450 nm. For a coupled-in light power of around one milliwatt, the emitted light power at the apex of the near-field optical probe varies depending on the tip diameter from one nanowatt to one microwatt, the intensity depending not only on the diameter of the aperture but also on the particular shape of the taper of the near-field optical probe concerned.

The upper limit for the emitted light power is given by the power which is sufficient to destroy the aluminium layer by overheating, this power being reached above approximately one milliwatt of light coupled into the optical fibre at room temperature. It has been established that the amount of light that can be coupled-in without destroying the near-field optical probe increases by a factor 10 at low temperatures.

The tuning fork 30 of the specific example has a resonance frequency of 32768 Hz at room temperature and has a pair of pick-up contacts (not shown) deposited on its surface. On mechanical excitation of the tuning fork 30, a voltage proportional to the oscillation amplitude is produced on the contacts. Without the single-mode fibre adhesively bonded thereto, the tuning fork has a Q-factor of approximately Q=64000 in vacuum and Q=7500 at atmospheric pressure.

To adhesively bond a section of the single mode fibre 38 along one of the prongs of the tuning fork, as shown schematically in Fig. 4, first a thin film of adhesive is applied to the tuning fork which is then baked for ten minutes at approximately 100°C. A second thin layer is then applied. The circuit board 5, to which the end face of the tuning fork 30 has already been bonded in an upstanding manner as shown in Fig. 4, is moved towards the section of the fibre 38 by means of a precision xyz-positioner until the optical fibre lies free of tension along the tuning fork prong.

The tip section should extend approximately 1mm beyond the tuning fork. The adhesive used is two-component epoxy resin adhesive. Contact adhesive can also be used, but the fibre is more prone to detach from the tuning fork than when epoxy resin adhesive is used. For either adhesive the best results are obtained when the adhesive is applied as thinly as possible.

As a result of the adhesive bonding of the single-mode fibre, the resonance frequency shifts to higher frequencies, i.e. to a resonance frequency of between 33.9 kHz to 34.4. kHz depending on the adhesive film. At the same time, the Q-factor reduces to 300 to 700.

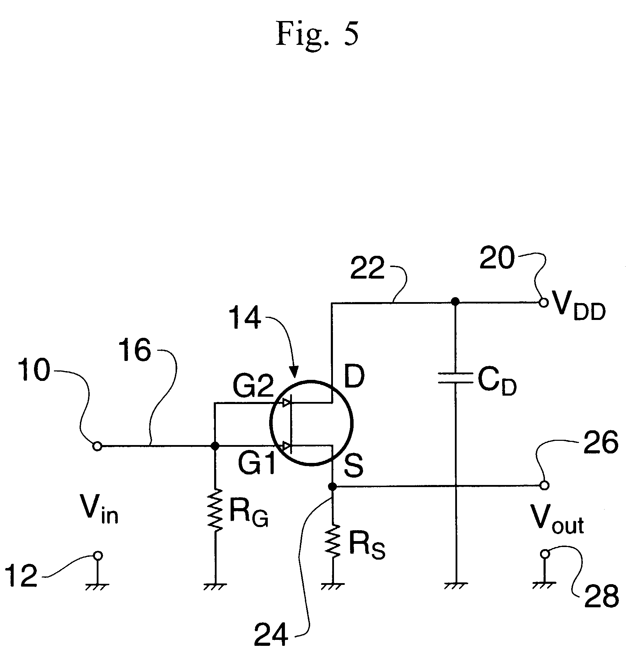

The signal preprocessing circuit 8 of the circuit board 5 is now described in more detail with reference to Figures 5 to 10.

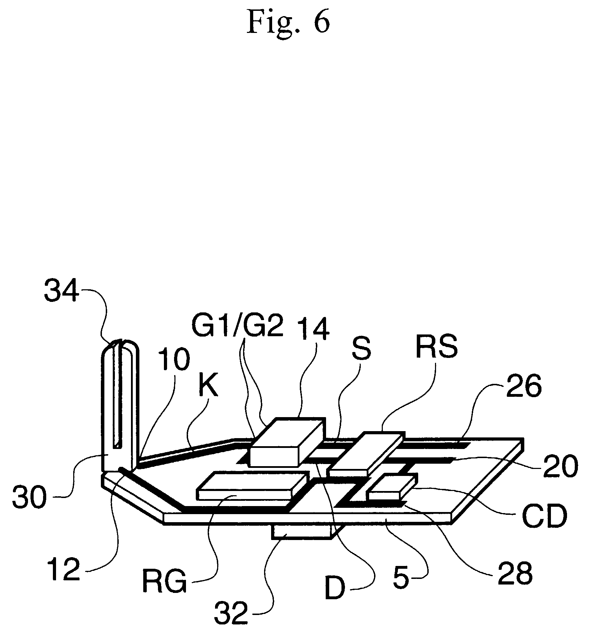

Figures 5 and 6 show details of a probe head according to a first circuit embodiment of the invention with Figure 5 being a circuit diagram and Figure 6 a schematic perspective view of the probe head showing obliquely the underside of a populated circuit board bearing the circuit of Figure 5.

Referring to Figure 5, two paired electrodes of a piezoelectric oscillator such as a tuning fork 30 (not shown in Figure 5) are connected to terminals 10 and 12, terminal 10 being connected in parallel to gates G1 and G2 of a dual-gate field effect transistor (FET) 14 via a short conductive path 16 and terminal 12 being connected to earth. In operation, the tuning fork 30 is vibrated on resonance and acts as a very small voltage source, supplying an AC signal of voltage Vin across the terminals 10 and 12.

A resistor RG having a resistance in the megaohm range is connected to the conductive path 16 on one side and on the other side to earth. The resistance of the resistor RG effectively defines the input impedance of the circuit since the gates G1 and G2 draw negligible current and the major part of the input voltage Vin drops across it. Resistor RG also serves to protect the FET 14 from damage and to filter out noise such as Brownian noise.

The drain D of the FET is held at a voltage VDD supplied to the circuit via a terminal 20 with a voltage of VDS dropping across the drain and source. The drain voltage input terminal 20 is connected to the drain D via conductive path 22 and also to earth via a capacitor CD. The capacitor CD serves to protect the FET from voltage spikes, for example when an external supply connected to terminal 20 is turned on or off.

The source S of the FET is connected by a conductive path 24 to a resistor RS having a resistance in the kiloohm range, the other side of which resistor RS is connected to earth. A voltage VS drops across the resistor VS where VDD=VDS+VS, it being understood that these voltages are principally static (DC) whereas the signal from the oscillator Vin is principally dynamic (AC). The source side of the resistor RS is connected via a conductive path to a terminal 26. A further terminal 28 connected to earth is provided. An output signal of voltage Vout is taken from the circuit is taken from across the terminals 26 and 28, where Vout is principally dynamic (AC) being the processed form of Vin which rides on a much larger static component equal to VS.

In one example of the circuit of Figure 5, referred to in the following as Example 1A, an ultra-high frequency (UHF) gallium arsenide metal-semiconductor FET (GaAs-MESFET) with the item code 3SK166 is used. This MESFET is manufactured by Sony and is an n-channel dual-gate MESFET with low noise characteristics. With reference to Figure 5, the dual gates G1 and G2 are connected in parallel to receive the input signal. The resistor RG has a resistance of 10 megaohm and the resistor RS has a resistance of 2.2 kiloohm. The resistors used are metal-layer resistors of the type Minimelf Vitrohm 503. The capacitor CD has a capacitance of 47 nanofarad and is a ceramic multi-layer condensor of type B37941-K from Siemens.

All components are mounted on an epoxy resin circuit board 5 using an SMD soldering process. The tuning fork 30 is an exception, its pick-up contacts being contacted by hand to the input pads 10 and 12 of the circuit 8 via bridging wires.

A GaAs-MESFET has the advantage that the gate-source capacitance and the gate-drain capacitance are low, the former being generally around an order of magnitude larger than the latter. Moreover, the gate-source capacitance will generally be lower the shorter the gate length, so that a FET with short gate length is preferred. Typically the gate-source capacitance is around 1 to 50pF.

Although with a GaAs-MESFET 1/f noise can be considerable at lower frequencies, such noise by definition decreases as frequency increases, so that the use of tuning forks having a resonance frequency of at least 100kHz is preferred when a GaAs-MESFET is used. A GaAs-MESFET is also preferred for low temperature applications at cryogenic helium temperatures (i.e. around or below 4.2 Kelvin). A GaAs-MESFET is also suitable for room temperature applications, as is also a silicon junction FET (Si-JFET). Most kinds of silicon FETs, including Si-JFETs, are however unsuited for use below around 60 to 70 Kelvin due to carrier freeze-out. Some types of silicon complementary MOSFETs could however prove to be suitable at temperatures below 60 Kelvin. In any case, at room temperature, the noise characteristics of commercially available Si-JFETs are generally superior to those of GaAs-MESFETs, especially at lower frequencies. A Si-JFET should thus be considered for room temperature use, especially when a low frequency tuning fork, e.g. 33kHz, is used.

A second example of the first circuit embodiment, referred to as Example 1B, thus has a Si-JFET with the item code 2N4416 manufactured by Siliconix. The circuit diagram is the same as that shown in Figure 5 except for the fact that since this JFET only has one gate one of the gate contact lines of Figure 5 is omitted. The resistor RS has a different resistance of 1.21 kiloohm. The other circuit components RG and CD are the same as for Example 1A.

Figure 6 is a schematic perspective view of a probe head according to the first circuit embodiment, showing obliquely the underside of a circuit board 5 bearing the circuit with the tracks, terminal pads and populated components of the circuit. The reverse side of the circuit board 5 (not visible) is metallized over its full area and tied to earth as a safeguard against earth loops and pick-up noise.

The circuit board 5 is generally rectangular in shape, but with two chamfered end faces at one end, and has dimensions of 0.625 inches long by 0.312 inches wide and 0.125 inches thick (16x8x3mm). The circuit board may be of a conventional PCB material such as a glass-fibre epoxy. A ceramic circuit board, e.g. $Al_2O_3$, can also be used and may be advantageous in some applications, owing to its mechanical rigidity and temperature stability. Its higher dielectric constant would however tend to increase parasitic capacitance somewhat.

At the left side of Figure 6, a tuning fork 30 is shown, two interleaved electrodes of which (detail not shown) are soldered with bridging wires to the terminal pads 10 and 12. The tuning fork 30 has arranged thereon. The tuning forks used in the testing have been commercially available quartz tuning forks with 33kHz and 100kHz resonance frequencies. Other tuning forks with frequencies of up to 540kHz are commercially available and could be employed.

Also shown in Figure 6 is a ceramic piezoelectric oscillator 32 mounted on the reverse side of the circuit board 5. In use, the oscillator 32 is electrically driven in forced oscillation to generate vibrations which are mechanically transmitted to the tuning fork 30 via the circuit board 5 to set the tuning fork into resonant oscillation. The positioning of the oscillator 32 is not critical, all that is required is an adequate path for the mechanical oscillations generated by the oscillator to reach the tuning fork 30. For example, mounting the oscillator 32 anywhere on either side of the circuit board 5 is satisfactory. An alternative way of setting the tuning fork into resonant oscillation is to use the tuning fork to excite itself, in which case a separate oscillator, such as the ceramic piezoelectric oscillator 32 used in the first circuit embodiment, is not required. Self-oscillation of a tuning fork is described for example on pages 23 to 24 of GB-A-2289759. Self-oscillation can be advantageous when probe heads comprising forks or other pizoelectric resonators of frequency greater than say 100kHz are used, when the Q-factor of the oscillator is very high such as is the case for low temperature operation or vacuum operation, when the medium in which the tip is to be scanned is of varying or unknown viscoscity, or when fast head scanning based on phase modulation such as with a phase-locked loop is desired.

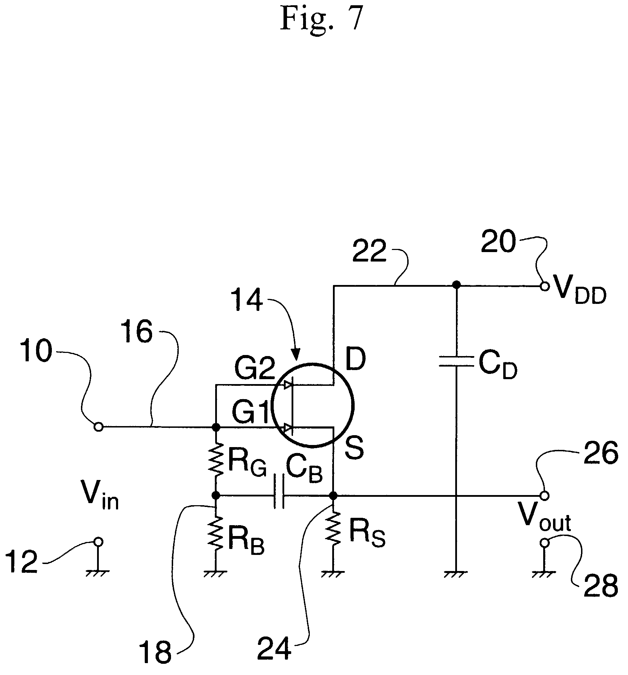

Figure 7 shows a circuit diagram of a second circuit embodiment of the invention. The electrodes of a crystalline piezoelectric oscillator such as a tuning fork 30 (not shown in Figure 7) are connected to terminals 10 and 12, terminal 10 being connected in parallel to the dual gates G1 and G2 of a field effect transistor (FET) 14 via a short conductive path 16 and terminal 12 being connected to earth, as in the first circuit embodiment.

A resistor RG having a resistance in the megaohm range is connected to the conductive path 16 on one side and on the other side via a further conductive path 18 to a further resistor RB having a resistance in the kiloohm range. The other side of the further resistor RB is earthed. Resistor RG also serves to protect the FET 14 from damage and to filter out noise such as Brownian noise.

The drain D of the FET is held at a voltage VDD supplied to the circuit via a terminal 20. The drain voltage input terminal 20 is connected to the drain D via conductive path 22 and also to earth via a capacitor CD.

The source S of the FET is connected by a conductive path 24 to a resistor RS having a resistance in the kiloohm range, the other side of which resistor RS is connected to earth. The source side of the resistor RS is connected via a conductive path to a terminal 26. A further terminal 28 connected to earth is provided. An output signal of voltage Vout is taken from the circuit is taken from across the terminals 26 and 28.

Capacitor CB links the source and gate sides of the circuit as a bootstrap capacitor to provide positive feedback and thus maximize the AC input impedance across the input terminals 10 an 12, noting that the bootstrap effect is frequency dependent owing to the high-pass filter formed by the bootstrap capacitor and resistor CB and RB.

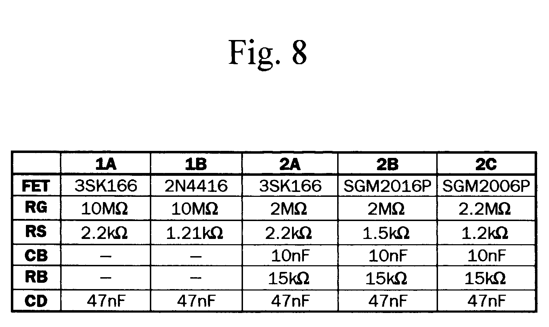

Figure 8 is a table showing the components used in the two examples 1A and 1B of the circuit of Figure 5 already discussed and the three examples of the the circuit of Figure 7, these further examples being labelled 2A to 2C. In example 2A, the same GaAs-MESFET as used in Example 1A is used, i.e. a Sony 3SK166. In Examples 2B and 2C, different UHF GaAs-MESFETs are used with item codes SGM2016P and SGM2006P respectively. These are also low-noise n-channel dual-gate MESFETs manufactured by Sony. It is also noted that the resistors are of the metal-layer type and the capacitors of the ceramic multi-layer type.

A general design goal of circuits embodying the invention is to achieve an input impedance which is as large as possible. Since a piezoelectric oscillator can be considered to a good approximation as purely capacitive, the capacitance of the oscillator thus forms a capacitive voltage divider with the input capacitance of the source-follower circuit, so that the design goal should be the minimisation of the input capacitance of the source-follower circuit. In addition, the input resistance of the circuit forms a high pass filter together with the voltage source capacitance and the cut-off must be chosen so that it does not damp the eigenfrequency of the voltage source (33 and 100kHz in the specific examples).

By reason of the above, the physical path 16 from the pick-up electrode on the piezoelectric oscillator to the gate or gates of the FET of the source-follower circuit should be kept as short as possible, since the parasitic capacitance of the connection line 16 can be expected to scale roughly proportionally with the the path length.

The fact that in the examples of the first and second circuit embodiments both gates of the dual-gate transistors are connected up would appear to be contrary to this design principle, since it would appear to be beneficial to connect up only one of the gates. We have tried this, shorting the second gate G2 to the source, but the performance was inferior. This was owing to the fact that although the input capacitance of the circuit was decreased, the transconductance fell supraproportionally leading to a net worsening of performance.

Probe heads according to embodiments of the invention may for example employ the circuits described herein, but in conjunction with resonant piezoelectric elements other than tuning forks for oscillating the tip. For example, a circuit according to any of the embodiments of the invention can be combined with an oscillating crystal probe head according to US4851671, the electrodes numbered 5 and 6 in US4851671 being connected across the terminals 10 and 12 of the circuits of any of the embodiments described in the present specification. Crystalline piezoelectric oscillators of other shapes, for example hollow bars, are also commercially available and could be used. Such crystalline oscillators are most commonly made of single crystal quartz or silicon.

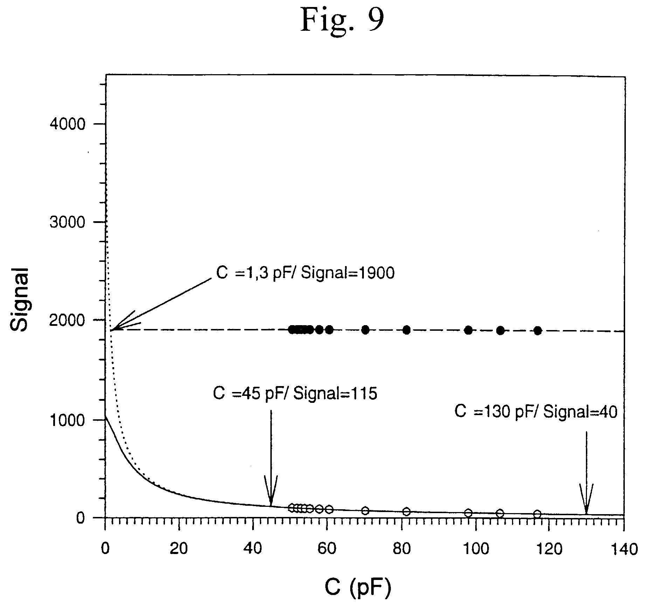

Figure 9 is a graph showing the results of an experiment conducted to compare the performance of a probe head according to Example 1A of the first circuit embodiment and a 33kHz tuning fork with the performance of a probe head using the same tuning fork but without the circuit shown in Figure 5 in which the output signal is taken from the electrodes of the tuning fork to a cable and to the signal amplifier. In this experiment, to obtain the data points lying on the upper curve, capacitors of different capacitance in the range 50 to 300 picofarrad were connected across the output of a probe head according to Example 1A of the first circuit embodiment to simulate the parasitic capacitance associated with the coaxial cable which is, in typical use, connected between such a probe head and a lock-in amplifier 36, such cable having an impedance of around 100 picofarrad per metre. Throughout the experiment, the tuning fork 30 was oscillated at 33kHz with a peak-to-peak value of output voltage Vout from the probe head of around 100 microvolts by applying an electrical signal of appropriate magnitude to the ceramic oscillator 32.

As can be seen from Figure 9, the upper curve of the data points for Example 1A approximates very closely to a straight line at a constant signal level of around 1900 (arbitrary units). These results indicate that the signal level delivered by a probe head according to Example 1A of the first circuit embodiment to a lock-in signal amplifier will be unaffected by the lengths of coaxial cable typically used to interconnect them.

After collecting the data for the upper curve, the track 16 between the pick-up electrode of the tuning fork 30 and the gates of the FET 14 was severed with a scalpel at the position indicated with reference sign K in Figure 6. An output lead was then soldered onto the terminal pad 10 to take, what was previously the input signal Vin for the circuit of Figure 5, as the output Vout, thus bypassing the circuit of Figure 5.

The experiment was then repeated with the same set of capacitors of capacitance 50 to 300 picofarrad to collect the data points lying on the lower curve of Figure 9.

As can be seen from Figure 9, there is an orders of magnitude difference between the signal levels delivered to the signal amplifier with and without the FET circuit of Figure 5, the difference becoming larger as the parasitic capacitance ("cable length") increases. The signal in arbitrary units is 115 and 40 with capacitances of 45pF and 130pF respectively, as compared with a signal of 1900 for the circuit of Example 1A irrespective of "cable length". The responsivities of near-field optical microscopes having a probe head connected to the external signal amplifier with a cable of 45pF and 130pF are 0.14 and 0.058 mV/nm respectively, as compared with a responsivity of 2.1 mV/nm for Example 1A. The prong deflections that enter into the responsivity values were obtained from calibration measurements performed with a Normanski interferometer and a conventional high-resolution optical microscope. These calibration measurements also show that prong deflection as a function of signal output from the tuning fork is linear over 5 or 6 orders of magnitude, the responsivity of the head being defined by the gradient of the function and being a measure of how much signal is delivered by the head for a given prong deflection.

The responsivity values can be considered in the light of the peak-to-peak deflections of interest. For example if a near-field optical microscope is needed with a maximum desired prong deflection of less than say a quarter of the optical aperture diameter, i.e. less than 25nm for a typical optical aperture diameter of 100nm. This would translate into a signal of 50 millivolts for a probe head according to Example 1A with a 33kHz tuning fork.

Alternatively, the responsivity values can be considered in the light of the force of the shear force between tip and sample that is detectable. The shear force FS is proportional to the prong deflection x and is given by the equation $FS = (kx/Q\sqrt{3})$ $(1-V/V0)$ where k is the spring constant or stiffness of the arm of the tuning fork to which the the the tip is attached, Q is the quality factor of the tuning fork, V is the amplitude of the signal output from the probe head in the presence of the regulated level of tip-sample interaction (i.e. during scanning) and V0 is the amplitude of the signal output from the probe head in the presence of no tip-sample interaction (i.e. with the tip well away from the sample). When interpreting the above equation, it should be borne in mind that the most usual scanning mode will be scanning to maintain V constant. With the embodiments of the invention it is possible to construct an near-field optical microscope in which V is maintained constant during scanning at a level which results in the exertion of a shear force on the sample of only 1 to 10 piconewton. The theoretical lower limit for a tuning fork arrangement is given by the Boltzann noise and is around 1/3 piconewton for a stiffness k=23600 and a temperature T=4.2K, corresponding to a displacement of around 50 femtometres.

The ability with the circuit embodiments of the invention to reduce the force exerted on the sample during scanning is of major practical significance for imaging soft samples such as biological tissue or liquid crystals. For example, it is considered that a force of around 20 piconewton is sufficient to tear bonds in a DNA molecule.

By the same token, the reduction in interaction force also results in a reduced force acting on the tip, which thus reduces the possibility of damaging the tip. Measurements of the inventor have demonstrated that a force of 2 nanonewton is sufficient to destroy the optical integrity of the tip aperture and a force of 40 nanonewton completely destroys the tip itself. It is possible with circuit embodiments of the invention to scan with forces well below 2 nanonewton so that tip damage can be avoided. For example with a head according to Example 1A, using a tuning fork with Q=400 and k=23600, oscillating the tuning fork to generate a usable output signal of Vout=100 microvolt and setting V/V0=0.7, the shear force of the interaction is only 0.5 nanonewton. Here it is noted that this example allows regulation to be set at between V/V0=0.6 to 0.9 corresponding to a tip-sample distance of around 10 to 20 nanometre.

By comparison, with a probe head in which the signal is taken directly from the tuning fork, the measured responsivity is typically around 100 times less and the minimum achievable interaction force is thus 100 times greater.

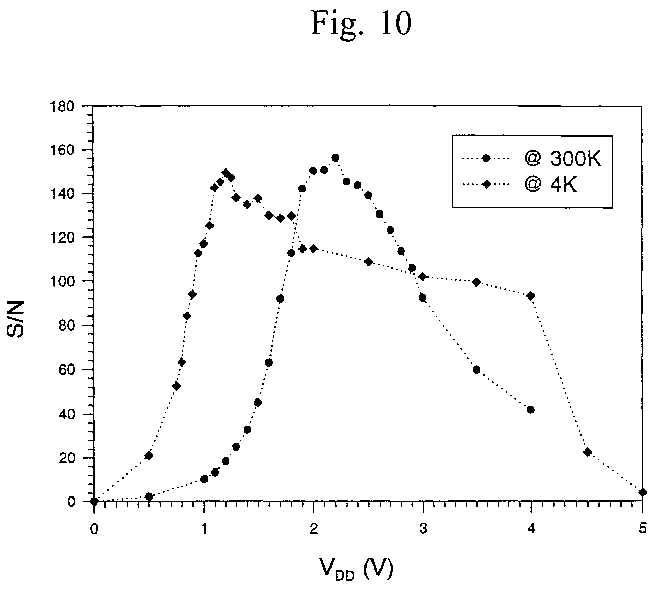

Figure 10 shows the signal-to-noise ratio at 4.2K and 300K of the output signal Vout as a function of bias (drain-earth) voltage VDD for a head having a circuit according to Example 1A and a 33kHz tuning fork. The values were taken with Vin = 100 microvolts. At both temperatures, there is a range of bias voltages VDD which give higher S/N ratios. At 4.2K the range of high S/N ratios is between about 1 and 4 volts with a peak at 1.2 volts and a fairly level plateau at intermediate values within the range. At 300K the range of high S/N ratios is between about 1.7 and 3 volts with a pronounced peak at around 2 to 2.3 volts and a gradual fall off to higher voltages.

The rising edge of the signal-to-noise ratio (S/N) in Figure 10 can be ascribed to the fact that the FETs do not operate efficiently until VDD rises above approximately 1 volt, having poor gain and high input capacitances at lower voltages.

The falling part of the signal-to-noise ratio at higher bias voltages VDD can be ascribed for all the GaAs-MESFET examples (but not the JFET Example 1B) to an increase in noise as the bias voltage VDD increases.

The peak S/N ratio, i.e. the optimum operational conditions, is thus obtained at the best compromise between these two conflicting factors.

It is thus expected that all the GaAs-MESFET examples will have signal-to-noise ratio characteristics having the same form as Figure 10, but with different ranges for different circuit variations, oscillator frequencies and temperatures.

It is noted that Figures 9 and 10 relate to Example 1A of the first circuit embodiment with a 33kHz tuning fork. This was in fact the first probe head embodiying the invention constructed and, as a result, has been the most extensively tested to date. However, the overall performance of the other examples can be considered to be better. The examples of the second circuit embodiment having a bootstrap are considered to be an improvement over the first circuit embodiment. As Example 2A uses the same FET as Example 1A, a fair comparison can be drawn between first and second circuit embodiments in this case and it has been established that the noise characteristics for the bootstrapped circuit 2A are superior.

A general improvement of noise characteristics with increasing oscillator frequency is also evident from a comparison of the performance characteristics of the two Examples 1B and 2B that were each tested at two frequencies, namely 100kHz and 33kHz.

Although the singal-to-noise ratio is poor for VDD>5V, the specification sheet of the FET 3SK166 used in Examples 1A and 2A in fact specifies drain-source voltages VDS of 8 and 12 volts respectively! It is thus surprising that the noise characteristics in the tested circuits are so bad at the bias voltages which should provide for "normal" operation.

Moreover, the input capacitance of the FET 3SK166, used in Examples 1A and 2A, is specified to have a typical value of 1.3 pF at VDD=5V and ID=10mA and the input capacitance of the 33kHz and 100kHz tuning forks to be only 1.46pF and 1.2pF respectively. However, results (not shown) show that the input capacitance of the circuits is much larger than specified in the FET data sheets. These results thus show that the specification sheets issued by the manufacturer do not provide even a general guide to the performance of the FET concerned under the abnormal conditions in which they are used here with low drain-source voltages and correspondingly low drain currents, and with a signal source connected to the gate which has a very low, almost purely capacitive impedance in the picofarrad range.

To confirm that the circuits built were not faulty and that their strange operating characteristics and optimum operating values were not artefacts, the circuits of all five examples were remeasured but with a capacitance of 1.0 nanofarrad i.e. with an input capacitance of the order of one-thousand times larger than that of a quartz tuning fork. The plot of these results (not shown) of voltage gain versus drain-source voltage shows gain curves which, for all five examples, rise to saturate at values of between 0.75 and 0.9 by a value of drain-source voltage VDD of about 1V. These results thus confirm that the very low input capacitance of the piezoelectric voltage source, as represented for example by a tuning fork, has a major effect on circuit design and performance.

The fact that the circuits are operating on their limits as far as their performance as source-follower circuits are concerned is evident from a comparison of the gain characteristics (not shown) with the input capacitance characteristics (not shown). The gain (AV=Vout/Vin) is strongly correlated with the input impedance of the circuit, which as mentioned is dominated by the input impedance of the FET, and peaks at only approximately 0.5 for Example 2C and less than 0.2 for Examples 1A, 2A and 2B. The source follower circuits are thus reducing the signal voltage by between 2 and 5 times.

However, despite this reduction the circuits provide a beneficial effect, since the output impedance of the probe head of the examples is only of the order of a hundred ohms, instead of a megaohm in the case of a probe head which delivers its output directly from a tuning fork. Consequently, voltage losses in a cable used to connect the probe head to the signal amplifier are negligible, so that cable length is no longer a significant consideration, thus eliminating a design constraint of considerable practical importance. For example, performance will not change appreciably whether the signal amplifier is connected as directly as possible to the probe head, is connected by a 20 centimetre cable or is connected by a 10 metre cable.

By comparison, the voltage gain AV of a probe head in which the output signal is taken directly from a tuning fork, as in the lower curve of Figure 9, is expressed by AV=CS/(CS+CC) where CS is the capacitance of the tuning fork and CC the capacitance of the cable used to connect the probe head to the signal amplifier. Since CS, the output impedance of such a probe head, is approximately one picofarrad (i.e. around a megaohm at 100kHz) and cable capacitance is around 100 picofarrad per metre voltage, voltage gain will be dependent on cable length, having a value of around only 0.01 for a typical cable length of one metre.

The difference between the upper and lower curves of Figure 9 can thus be appreciated having regard to the output impedance of a piezoelectric element, for example a tuning fork, as compared with the output impedance of a circuit according to any of the embodiments.

As will be understood from the above, the signal preprocessing circuits have a source-follower configuration and serve to convert the very high impedance signal received as an input signal (Vin) from the pick-up contacts of the tuning fork 30 into an output signal (Vout) of much lower impedance which can then be conveyed to conventional signal processing electronics along a substantial length of cable without significant capacitive losses.

Further discussion of the signal preprocessing circuits shown here is to be found in European patent application number 97301658.7, the whole contents of which is incorporated herein by reference.

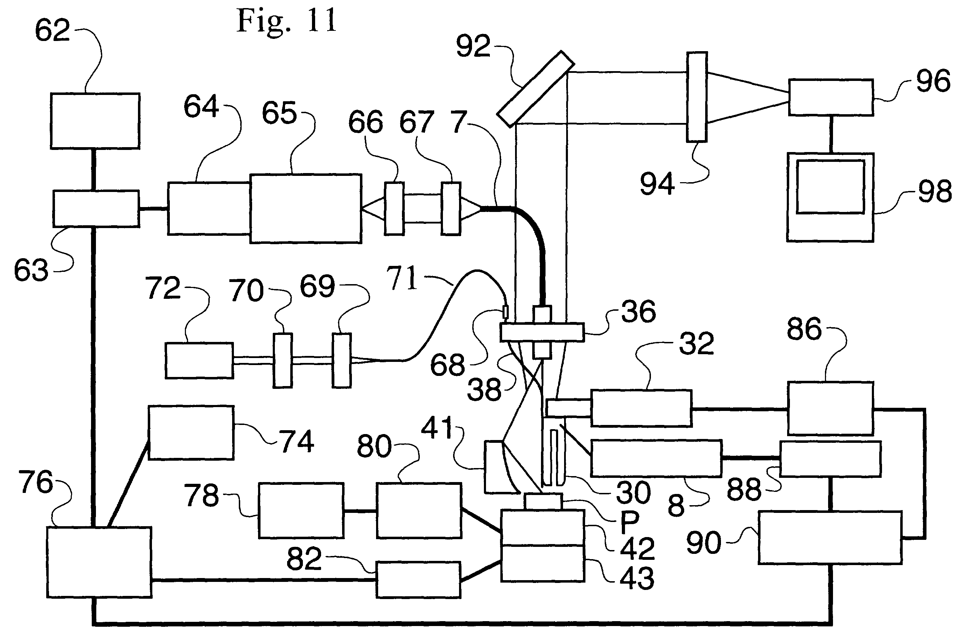

Figure 11 shows schematically some of the optical, mechanical and electronic elements of the microscope described above with reference to Figure 1 together with associated components of the microscopy system, variously electronic, mechanical and optical in nature. The components can be grouped into five functional groups which are now described in more detail.

Firstly, for exciting the sample P there is provided a laser 72 for generating a monochromatic light beam, a bandpass filter 70 for filtering the light beam, an objective lens 69 for focusing the laser beam to couple it into a single-mode optical fibre 71, a fibre-to-fibre coupler 68 forming a junction between one end of the single-mode fibre 71 and one end of the previously discussed single mode fibre 38, the other end of which forms the near-field optical probe 34 from which the excitation light is emitted to illuminate the facing surface of the sample P. The fibre-to-fibre coupler 68 used in the specific example is a non-stick mechanical fibre coupler from the company Siecor.

Secondly, for collecting the photoluminescence, reflection or other optical signal emitted from the region of the sample P under illumination, there is provided the previously discussed ellipsoid mirror 41 and multi-mode fibre bundle 7, as well as an objective lens 67 arranged to collimate light emitted from the distal end of the fibre bundle 7 and a further objective lens 66 $f$-matched to a spectrometer 65 for focusing the light signal onto the entrance slit of the spectrometer 65. By matching the numerical aperture of the distal end of the multimode fibre bundle 7 with that of the spectrometer 65, the lenses 66 and 67 ensure that loss of signal intensity is minimized. A liquid nitrogen cooled CCD camera 64 arranged at the exit slit position of the spectrometer, a CCD signal processing controller 63 and a subsequent computer 62 for recording and subsequent processing of the spectroscopic data from the CCD camera 64. A data link is provided between the controller 63 and the control unit 76 for the sample rastering so that the optical signal data from the CCD camera 64 can be correlated with the position of the near-field optical probe 34 on the sample surface to allow spatially correlated micrographs and spectrographs to be recorded.

Thirdly, for visual access to the sample and probe, there is provided free-space optics comprising the previously described collection lens 36 arranged to have a common focal plane with the lower focus of the ellipsoid mirror 41 in the region of the sample surface, as well as a plane mirror 92 and a further lens 94 for focusing the light onto the area of a mini-CCD camera 96 which relays the image to a monitor 98 on which the region of the sample underlying the near-field optical probe 34, the probe 34 itself and the tuning fork 30 are displayed. In the specific example, the collection lens 36 has a focal length of 65mm and the lens 94 has a focal length of 200mm, the ratio of the focal lengths of the two lenses 36 and 94 thus providing an enlargement of a factor three in the image plane of the mini CCD camera 96.

Illumination for the image formed by the free-space optics can be provided by white light coupled into the multi-mode fibre bundle 7. For example, a plane mirror (not shown) can be inserted between lenses 66 and 67 to reflect collimated white light from a white light source (not shown) onto lens 67 which then couples the white light into the fibre bundle 7. Alternatively, illumination for the free-space optics may be provided by a light emitting diode arranged in the shadow of the anvil 40 on the underside of the signal preprocessing circuit 8. The free space optics greatly facilitates sample positioning and manipulation with the macropositioning unit 42 to set up the system for near-field optical scanning.

A further option made available by the provision of the collection lens 36 is the option of being able to perform far-field spectroscopy on a sample, for example as investigations preliminary to near-field spectroscopic investigations. A direct comparison between near- and far-field optical properties can then be made.

Fourthly, for the distance regulation there is provided the previously discussed piezoelement 32 which is driven at the resonance frequency of the tuning fork 30 by a function generator 86. The electric signal of the mechanically excited tuning fork 30 is read into an electronic control unit 76 via the previously discussed signal preprocessing circuit 8, integral with the head, and an externally arranged preamplifier 88 and lock-in amplifier 90, the lock-in amplifier being synchronised with the function generator 86. A computer 74 compares the measured signal value with a preset desired value and, according to the deviation between actual and desired values, controls the height adjustment of the micropositioning unit 43 via the electronic control unit 76 and a power amplifier 82 to thus form a feed-back loop. An oscilloscope (not shown) is connected to the electronic control unit 76 and serves for monitoring the distance regulation. Further details of distance regulation of this kind are to be found in GB-A-2289759. For the rastering over the sample surface, software running on a computer 74 delivers commands for the electronic control unit 76 which positions the sample P from raster point to raster point in the plane perpendicular to the near-field optical probe 34 via the power amplifier 80 and the micropositioning unit 43. At the same time, at each raster point a TTL signal is sent to the computer 62 for image processing of the optical signal to initiate the recording of the spectrum. After completion of the recording of the spectrum the sample P is moved to the next raster point. The integration time for the image processing and the time interval between two TTL signals is coordinated via the control software.

Fifthly, for the coarse positioning of the sample P, the previously discussed x, y and z macro-positioners 42 are provided, there being a function generator 78 and power amplifier 80 for driving these positioners.

Fig. 12 shows a schematic side section of the microscope as mounted to a sample holder and arranged in an insert tube.

The microscope, comprising positioning and optics modules 4 and 2, is connected to a horizontally arranged circular brass plate 48 which is connected in turn to three, radially arranged stainless steel tubes 50 of diameter 8mm and wall thickness 0.5mm which extend vertically through a series of ten saturn-ring shaped, polished copper plates 51 of thickness 1 mm and spaced 90 mm apart, acting as radiation shields, to a top assembly 55 which is shown seated via a pinch flange 54 and O-ring 53 on a cylindrical insert tube 46 having a closed base, the insert tube being suitable for insertion into a cryostat and having a corner valve with integrated safety valve 52 extending laterally from a welded connection situated close to the top of the insert tube. The insert is formed from stainless steel tubing with a diameter of two inches (52.8mm), a wall thickness of 0.56mm and a length of 1165mm. An insert diameter of two inches is a standard among cryostat manufacturers.

It is noted that the microscope and sample holder may be redesigned to fit into an insert of a diameter of one-and-a-half inches, this being a further standard among cryostat manufacturers.

The connections between the brass and copper plates 48 and 51 and the stainless steel tubes 50 are formed by brazing. Nine four-pole socket connectors 56, which are sealed with O-rings, serve as electrical feed-throughs. The lid of the assembly is provided with two pinch flange screws 59 and 61 which serve as feed-throughs for the single and multi-mode optical fibres 38 and 7 respectively. The fibres are set in with wax at the point of the feed throughs in respective short stainless steel tubelets. For the free-space optics, a glass window 60 is set with wax into a lid of the top assembly 55. The window 60 is placed in the optical path between lenses 36 and 94. The lid in which the window 60 is set is connected to the remainder of the top assembly via a threaded connection and under an O-ring seal formed by and O-ring 57. The electrical connections between the socket connectors 56 and the corresponding components of the microscope are formed with "twisted-pair" copper leads of 0.1mm thickness which are insulated with varnish and fed through the stainless steel tubes. The interior regions of the stainless steel tubes 50 can be used to accommodate the various electrical and optical leads from the top assembly 55 to the optics module 2. A calibrated carbon resistor (not shown) is arranged in the vicinity of the sample P and is used for temparature control. With the system shown in Fig. 12 uninterrupted measurement times in liquid helium-4 of 80 hours are possible.

As well as allowing experiments to be performed in a cryostat at low temperatures, e.g. liquid helium temperatures such as 1.5 or 4.2 Kelvin, the insert can be used to perform measurements at room temperature in a vacuum or in a controlled gaseous atmosphere, for example a low pressure gaseous helium atmosphere.

As an alternative to an ellipsoid mirror, a parabolic mirror could be used. The parabolic mirror has a profile for collimating light received from the sample, i.e. for generating parallel rays extending in the z-direction. There is a further parabolic mirror of the same profile and outer dimensions arranged above and facing the first-mentioned parabolic mirror so as to focus the received parallel light rays onto a focal point on the optical axis lying above the sample, at which focal point signal collection means, such as a receiving multi-mode fibre or a detector, is arranged facing in the opposite direction to the signal collection means of the previously described ellipsoid-mirror based system.

## Claims

1. A near-field optical microscope comprising:

   a near-field probe (34);
   a mirror arrangement (41) for collecting in reflection light emitted from a sample positioned in the vicinity of the near-field probe;
   light collection means (7) arranged to receive light collected by the mirror arrangement (41);
   **characterised in that**
   the mirror arrangement comprises an axially symmetrical, bowl-shaped mirror (41) having a through hole arranged axially in the base of the bowl-shaped mirror in the region of a focal point of the mirror, the near-field probe (34) being positioned in the base of the bowl-shaped mirror adjacent to said focal point and the light collection means (7) being arranged to have focused upon it light originating from said focal point which has been reflected by the mirror (41).

2. A microscope according to claim 1, wherein the bowl-shaped mirror is an ellipsoid mirror and said focal point is the lower focal point of the ellipse.

3. A microscope according to claim 1, wherein the bowl-shaped mirror is a paraboloid mirror.

4. A microscope according to claim 1, 2 or 3, wherein the light collection means comprises an optical fibre (7), the aperture at one end of which fibre is positioned to have focused upon it said light originating from said focal point which has been reflected by the mirror (41).

5. A microscope according to claim 4 when appended to claim 2, wherein said aperture is positioned adjacent to the upper focal point of the ellipse.

6. A microscope according to any one of the preceding claims and comprising a convex lens (36) arranged to receive light not collected by the mirror (41) from the region of the near-field probe (34) and said hole.

7. A microscope according to claim 6 when appended to claim 4, wherein the convex lens (36) has a hole extending through its optical axis through which passes the optical fibre (7) so that said aperture is positioned between the convex lens (36) and the mirror (41).

8. A microscope according to any one of the preceding claims, wherein the mirror (41) and near-field probe (34) are arranged in a first module (2) of the microscope and the microscope has a second module (4) comprising means (45) for mounting a sample and means (42, 43) for positioning the sample mounting means (45) within the region of the hole at the base of the mirror (41), the first and second modules being releasably coupled to each other so that the second module (4) can be detached from the first module (2) without disturbing the relative alignment of the near-field probe (34), mirror (41) and light collection means (7).

9. A microscope according to any one of the preceding claims, wherein the near-field probe (34) is secured to an oscillable, piezoelectric piece (30) having electrical contacts for delivering an AC signal characteristic of the forces acting on the near-field probe (34).

10. A microscope according to claim 9 and comprising a signal preprocessing circuit (8) arranged adjacent to the piezoelectric piece (30) for receiving as input the AC signal delivered by the electrical contacts of the piezoelectric piece (30), processing the AC signal and supplying the processed signal to an output of the signal preprocessing circuit (8) as a preprocessed AC signal.

11. A microscope according to claim 10, wherein the output impedance of the signal preprocessing circuit (8) in respect of the preprocessed AC signal is less than 1000 ohms.

12. A microscope according to claim 10 or 11, wherein the signal preprocessing circuit is formed on a circuit board (5) to which the piezoelectric piece (30) is secured so that a probe head assembly is formed comprising the near-field probe (34), piezoelectric piece (30) and signal preprocessing circuit (8), the probe head assembly being arranged within, and secured to, the bowl-shaped mirror (41).

# Fig. 1

# Fig. 2

# Fig. 3

Fig. 4

# Fig. 5

Fig. 6

# Fig. 7

# Fig. 8

|     | 1A | 1B | 2A | 2B | 2C |
|-----|-----|-----|-----|-----|-----|
| **FET** | 3SK166 | 2N4416 | 3SK166 | SGM2016P | SGM2006P |
| **RG** | 10MΩ | 10MΩ | 2MΩ | 2MΩ | 2.2MΩ |
| **RS** | 2.2kΩ | 1.21kΩ | 2.2kΩ | 1.5kΩ | 1.2kΩ |
| **CB** | — | — | 10nF | 10nF | 10nF |
| **RB** | — | — | 15kΩ | 15kΩ | 15kΩ |
| **CD** | 47nF | 47nF | 47nF | 47nF | 47nF |

# Fig. 9

# Fig. 10

Fig. 11

Fig. 12

**European Patent Office**

## EUROPEAN SEARCH REPORT

Application Number

EP 97 30 6032

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | HEINZELMANN H ET AL: "INSTRUMENTAL DEVELOPMENTS AND RECENT EXPERIMENTS IN NEAR-FIELD OPTICAL MICROSCOPY" THIN SOLID FILMS, vol. 273, no. 1/02, February 1996, pages 149-153, XP000624934 | 1,2,5,6 | G02B21/00 |
| A | * page 150; figure 2 * | 9 | |
| A | DE 195 10 368 A (KARRAI KHALED DR ;HAINES MILES DR (DE)) 23 November 1995 * abstract; figure 3 * | 1,9,10 | |
| A | US 5 473 157 A (GROBER ROBERT D ET AL) 5 December 1995 * column 7, line 10 - column 8, line 8; figure 4 * | 1 | |
| A | US 5 548 113 A (GOLDBERG BENNETT B ET AL) 20 August 1996 * column 6, line 12 - line 50; figure 3A * | 1,4,6 | |
| A | DE 41 24 090 A (OLYMPUS OPTICAL CO) 23 January 1992 * column 5, line 56 - column 6, line 18 * | 1 | TECHNICAL FIELDS SEARCHED (Int.Cl.6)<br><br>G02B |
| A | BERNDT R ET AL: "PHOTON EMISSION SCANNING TUNNELING MICROSCOPE" JOURNAL OF VACUUM SCIENCE AND TECHNOLOGY: PART B, vol. 9, no. 2 PART 02, 1 March 1991, pages 573-577, XP000222879 * page 574, left-hand column, paragraph 3; figure 1A * | 1,2 | |

The present search report has been drawn up for all claims

| Place of search | Date of completion of the search | Examiner |
|---|---|---|
| THE HAGUE | 29 June 1998 | Scheu, M |

EPO FORM 1503 03.82 (P04C01)